# EUROPÄISCHE PATENTANMELDUNG

(11) **EP 2 290 251 A1**
(43) Veröffentlichungstag der Anmeldung: **02.03.2011**
(21) Anmeldenummer: 10174272.4
(22) Anmeldetag: 27.08.2010
(51) Int. Cl.: F16D 1/096, F16C 35/063

(54) **Verfahren und Vorrichtung zum axialen Sichern eines Maschinenelements**

(30) Priorität: 31.08.2009 DE 102009039435
(71) Anmelder: Aktiebolaget SKF, 41 550 Göteborg (SE)
(72) Erfinder: Gläntz, Wolfgang, DE-97422 Schweinfurt (DE); Horling, Peter, DE-97453 Schonungen-Mainberg (DE)
(74) Vertreter: Schonecke, Mitja

(57) **Zusammenfassung**

Die Erfindung betrifft ein Verfahren zum axialen Sichern eines Maschinenelements (1), das an einem Träger (3) befestigt ist. Beim erfindungsgemäßen Verfahren wird eine Anschlagvorrichtung (2) derart neben dem Maschinenelement (1) angeordnet, dass die Anschlagvorrichtung (2) axial am Maschinenelement (1) anliegt. Zwischen einer Kontaktfläche (14) der Anschlagvorrichtung (2) und einer Gegenfläche des Trägers (3) wird eine Mikroformschluss-Verbindung ausgebildet und dadurch die Anschlagvorrichtung (2) am Träger (3) axial fixiert.

## Beschreibung

Die Erfindung betrifft ein Verfahren und eine Vorrichtung zum axialen Sichern eines Maschinenelements. Weiterhin betrifft die Erfindung eine Anordnung mit einem Maschinenelement und einer derartigen Vorrichtung.

Die axiale Position und/oder axiale Vorspannung eines Maschinenelements, das beispielsweise auf einer Welle oder in einer Bohrung angeordnet ist, kann auf unterschiedliche Weise gegen unzulässig starke Änderungen gesichert werden. Beispielsweise kann mittels eines Pressverbands eine kraftschlüssige Verbindung mit dem Maschinenelement ausgebildet werden. Dies lässt sich mit wenig Aufwand und kostengünstig realisieren. Allerdings erfordert eine zuverlässige Sicherung, die auch hohen axialen Kräften standhält einen hohen Anpressdruck und demgemäß eine hohe Überdeckung und auch eine sehr massive Ausbildung des Maschinenelements. Die hohe Überdeckung birgt zudem das Risiko, dass es bei der Ausbildung des Pressverbands zu einer Beschädigung der am Pressverband beteiligten Komponenten kommt. Kraftschlüssige Verbindungen werden deshalb in der Regel dann eingesetzt, wenn keine allzu hohen axialen Kräfte auftreten.

Bei sehr hohen axialen Kräften wird eine axiale Sicherung in vielen Fällen mit Hilfe von formschlüssigen Verbindungen realisiert. Ein Formschluss kann beispielsweise durch eine Schraubverbindung oder durch Materialumformung, insbesondere eine Verstemmung, ausgebildet werden und erfordert in der Regel einen höheren Aufwand als die Ausbildung eines Kraftschlusses.

Der Erfindung liegt die Aufgabe zugrunde, mit möglichst geringem Aufwand eine axiale Sicherung eines Maschinenelements auszubilden, die auch hohen Axialkräften zuverlässig Stand hält.

Diese Aufgabe wird durch ein Verfahren zum axialen Sichern eines Maschinenelements gemäß Anspruch 1 und eine Anschlagvorrichtung gemäß Anspruch 7 gelöst.

Beim erfindungsgemäßen Verfahren zum axialen Sichern eines Maschinenelements, das an einem Träger befestigt ist, wird eine Anschlagvorrichtung derart neben dem Maschinenelement angeordnet, dass die Anschlagvorrichtung axial am Maschinenelement anliegt. Das erfindungsgemäße Verfahren zeichnet sich dadurch aus, dass zwischen einer Kontaktfläche der Anschlagvorrichtung und einer Gegenfläche des Trägers eine Mikroformschluss-Verbindung ausgebildet wird und dadurch die Anschlagvorrichtung am Träger axial fixiert wird.

Die Erfindung hat den Vorteil, dass das Maschinenelement auch dann zuverlässig axial gesichert wird, wenn das Maschinenelement hohen Axialkräften ausgesetzt ist. Ein weiterer Vorteil besteht darin, dass das erfindungsgemäße Verfahren schnell und effizient durchgeführt werden kann.

Der Träger kann insbesondere als eine Welle ausgebildet sein. Die Anschlagvorrichtung kann eine Bohrung zur Aufnahme der Welle aufweisen.

Die Mikroformschluss-Verbindung kann mit Hilfe von Hartstoffpartikeln ausgebildet werden, die im Bereich der Gegenfläche partiell in das Material des Trägers eingedrückt werden. Dies hat den Vorteil, dass der Träger nicht eigens an die Verwendung beim erfindungsgemäßen Verfahren angepasst werden muss. Somit kann das erfindungsgemäße Verfahren bei üblichen Trägern eingesetzt werden. Weiterhin kann vorgesehen sein, dass die Hartstoffpartikel im Bereich der Kontaktfläche partiell in das Material der Anschlagvorrichtung eingedrückt werden. Auf diese Weise kann eine besonders stark belastbare axiale Sicherung ausgebildet werden.

Beim erfindungsgemäßen Verfahren kann vorgesehen sein, dass die Hartstoffpartikel erst dann in das Material des Trägers eingedrückt werden, wenn die Anschlagvorrichtung axial am Maschinenelement anliegt. Dadurch kann eine Beschädigung des Trägers und eine Schwächung der Mikroformschluss-Verbindung vermieden werden.

Die Anschlagvorrichtung kann eine erste Komponente und eine zweite Komponente aufweisen, wobei die erste Komponente derart neben dem Maschinenelement angeordnet werden kann, dass sie axial am Maschinenelement anliegt. Die erste Komponente kann mit der zweiten Komponente gegen den Träger gepresst werden. Das Anpressen der ersten Komponente gegen den Träger kann insbesondere mittels Kräften erfolgen, die senkrecht zur Axialrichtung des Trägers oder senkrecht zur Kontaktfläche der Anschlagvorrichtung orientiert sind. Die Abmessungen der zweiten Komponente können geändert werden und dadurch die erste Komponente gegen den Träger gepresst werden. Beispielsweise kann die zweite Komponente auf die erste Komponente aufgeschrumpft werden. Insbesondere können die Abmessungen der zweiten Komponente um wenigstens einen Wert geändert werden, der doppelt so groß ist, wie der Überstand der Hartstoffpartikel über die Oberfläche auf bzw. in der die Hartstoffpartikel angeordnet sind. Die Änderung der Abmessungen der zweiten Komponente kann beispielsweise durch eine Temperaturänderung bewirkt werden. Vorzugsweise wird mit dem erfindungsgemäßen Verfahren eine lösbare Verbindung ausgebildet. Dabei kann das Lösen der Verbindung durch eine zum Herstellen der Verbindung inverse Temperaturänderung erfolgen. Das Lösen der Verbindung kann dadurch erleichtert werden, dass die erste Komponente der Anschlagvorrichtung beim Herstellen der Verbindung ausschließlich oder überwiegend elastisch verformt wird.

Die zweiteilige Ausbildung der Anschlagvorrichtung bringt eine Reihe von Vorteilen mit sich. Beispielsweise kann dadurch eine Aufgabenteilung bei der Ausbildung der Mikroformschluss-Verbindung erzielt werden. Die erste Komponente kann eine Oberflächenstruktur aufweisen, die sich zur Ausbildung eines Mikroformschlusses eignet. Die zweite Komponente kann den für die Ausbildung der Mikroformschluss-Verbindung benötigten Anpressdruck erzeugen. Somit kann zunächst die erste Komponente in ihre endgültige Montageposition gebracht werden, wobei keine aufwendigen Maßnahmen erforderlich sind, um ein vorzeitiges Anpressen gegen den Träger zu verhindern. Danach kann die zweite Komponente montiert werden, welche dann die erste Komponente gegen den Träger presst.

Die erste Komponente kann insbesondere als ein Spannring ausgebildet sein. Die zweite Komponente kann insbesondere als ein Befestigungsring ausgebildet sein. Der Spannring kann den Befestigungsring wenigstens partiell radial umschließen oder umgekehrt.

Die Erfindung betrifft weiterhin eine Anschlagvorrichtung zum axialen Sichern eines Maschinenelements, das an einem Träger angeordnet ist. Die erfindungsgemäße Anschlagvorrichtung weist einen Spannring auf, der über eine mit Hartstoffpartikeln beschichtete radiale Kontaktfläche verfügt.

Eine derartige Anschlagvorrichtung ist trotz ihrer hohen axialen Belastbarkeit mit vergleichsweise geringem Aufwand herstellbar und sehr vielseitig einsetzbar. Insbesondere sind seitens des Maschinenelements und seitens des Trägers keine Anpassungen erforderlich, um die Anschlagvorrichtung einsetzen zu können.

Die Kontaktfläche kann insbesondere im Bereich einer Bohrung des Spannrings ausgebildet sein.

Die Hartstoffpartikel können partiell in ein Einbettungsmaterial eingebettet sein. Dies verleiht den Hartstoffpartikeln einen zuverlässigen Halt bis zur Montage der Anschlagvorrichtung und fixiert die Hartstoffpartikel nach der Montage insbesondere auch in Axialrichtung formschlüssig.

Die Härte der Hartstoffpartikel ist vorzugsweise größer als die Härte der Gegenfläche. Dies ermöglicht ein Eindrücken der Hartstoffpartikel in die Gegenfläche. Weiterhin kann die Härte der Partikel größer sein als die Härte des Spannringmaterials. Bei dieser Ausgestaltung können die Spannpartikel in den Spannring eingedrückt werden und erhalten dadurch zusätzlich zur Einbettung im Einbettungsmaterial einen zusätzlichen Halt. Die mittlere Größe der Hartstoffpartikel kann größer als die Schichtdicke des Einbettungsmaterials sein. Dadurch kann gewährleistet werden, dass die Hartstoffpartikel aus dem Einbettungsmaterial herausragen. Außerdem kann dadurch abhängig von der Härte des Einbettungsmaterials erreicht werden, dass die Hartstoffpartikel zwischen dem Material des Trägers und dem Material des Spannrings eingeklemmt werden. Die mittlere Größe der Hartstoffpartikel ist vorzugsweise kleiner als 100 µm. Dabei ist die mittlere Größe als quadratischer Mittelwert der Größe der Hartstoffpartikel definiert und die Größe der Hartstoffpartikel jeweils als deren maximale Erstreckung. Die Schichtdicke des Einbettungsmaterials ist vorzugsweise kleiner als 50 µm. Als Einbettungsmaterial eignet sich beispielsweise Nickel, insbesondere eine galvanische Nickelschicht. Es kann aber auch ein galvanische Schicht aus einem anderen Material oder eine auf sonstige Weise ausgebildete Schicht zum Einsatz kommen.

Der Spannring kann in Umfangsrichtung unterbrochen ausgebildet sein. Dies erleichtert ein Aufweiten und Stauchen des Spannrings bei der Montage. Insbesondere kann der Spannring in Umfangsrichtung auch mehrfach unterbrochen sein. Die Underbrechung kann das Material des Spannrings vollständig durchtrennen oder lediglich über einen Teilbereich der axialen Erstreckung des Spannrings ausgebildet sein. Der Außendurchmesser des Spannrings beträgt vorzugsweise wenigstens 100 mm.

Der Spannring kann eine axiale Anschlagfläche aufweisen. Damit kann eine definierte axiale Anschlagbedingung für das Maschinenelement realisiert werden. Weiterhin kann der Spannring einen radial gerichteten Flansch aufweisen. Dabei kann die Anschlagfläche insbesondere am Flansch ausgebildet sein. Dies ermöglicht eine großflächige axiale Abstützung des Maschinenelements. Die radiale Erstreckung des Spannrings inklusive Flansch ist vorzugsweise kleiner als dessen axiale Erstreckung. Dadurch ist gewährleistet, dass eine ausreichend große Kontaktfläche zur Ausbildung einer belastbaren Mikroformschluss-Verbindung mit dem Träger zur Verfügung steht.

Die Anschlagvorrichtung kann einen Befestigungsring aufweisen, der den Spannring radial staucht oder aufweitet. Der Befestigungsring ist vorzugsweise in Umfangsrichtung geschlossen ausgebildet. Die Kombination aus Spannring und Befestigungsring, insbesondere aus offenem Spannring und geschlossenen Befestigungsring, ermöglicht eine einfache Montage der Anschlagvorrichtung.

Der Spannring und der Befestigungsring können je eine konische Fläche mit gleichem Öffnungswinkel aufweisen. Dies ermöglicht eine präzise Montage und erleichtert die Demontage der Anschlagvorrichtung. Der Öffnungswinkel des Konus beträgt vorzugsweise wenigstens 0,5°.

Die Erfindung bezieht sich außerdem auf eine Anordnung mit einem Träger, einem Maschinenelement und der erfindungsgemäßen Anschlagvorrichtung, wobei das Maschinenelement am Träger befestigt ist und die Anschlagvorrichtung das Maschinenelement axial sichert. Der Träger kann insbesondere als eine Welle ausgebildet sein. Das Maschinenelement kann insbesondere als ein Lager ausgebildet sein. Besonders vorteilhaft ist es, wenn das Einbettungsmaterial wenigstens bereichweise, vorzugsweise vollflächig berührend am Träger anliegt, d. h. kein Spalt oder allenfalls nur in Teilbereichen der Oberfläche des Einbettungsmaterials ein Spalt zur Oberfläche des Trägers hin ausgebildet ist. Auf diese Weise wird der Reibwert durch das Einbettungsmaterial zusätzlich erhöht. Außerdem wird die mechanische Stabilität und Steifigkeit der gesamten Anordnung erhöht, da sich die Anschlagvorrichtung vollflächig oder zumindest über einen großen Bereich auf dem Träger abstützt.

Die Erfindung wird nachstehend anhand der in der Zeichnung dargestellten Ausführungsbeispiele erläutert.

Es zeigen
- Figur 1: ein Ausführungsbeispiel einer erfindungsgemäß ausgebildeten Lageranord- nung in einer schematischen Schnittdarstellung,
- Figur 2: einen vergrößerten Ausschnitt aus Figur 1,
- Figur 3: den Bereich der Kontaktfläche des Spannrings in einer stark vergrößerten schematischen Schnittdarstellung,
- Figur 4: eine Momentaufnahme der erfindungsgemäßen Lageranordnung während der Montage der Anschlagvorrichtung in einer Figur 2 entsprechenden Darstellung und
- Figur 5: eine weitere Momentaufnahme der erfindungsgemäßen Lageranordnung während der Montage der Anschlagvorrichtung in einer Figur 2 entspre- chenden Darstellung.

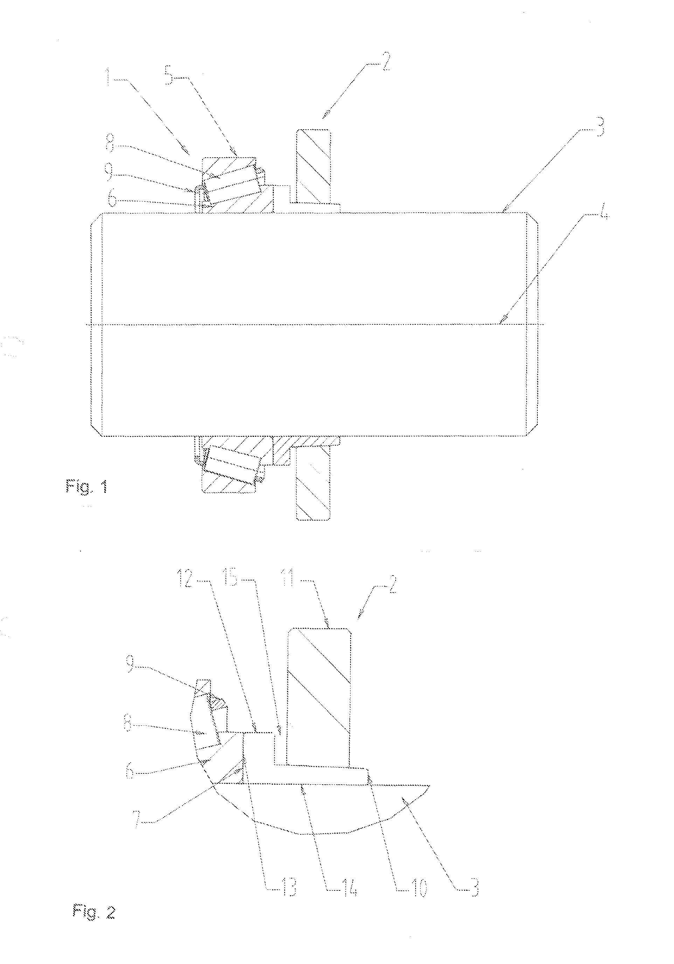

Figur 1 zeigt ein Ausführungsbeispiel einer erfindungsgemäß ausgebildeten Lageranordnung in einer schematischen Schnittdarstellung. Ein vergrößerter Ausschnitt aus Figur 1 ist in Figur 2 dargestellt.

Die Lageranordnung weist ein Kegelrollenlager 1 und eine Anschlagvorrichtung 2 zum axialen Sichern des Kegelrollenlagers 1 auf. Das Kegelrollenlager 1 und die Anschlagvorrichtung 2 sind an einer Welle 3 befestigt. Die Welle 3 kann beispielsweise als eine Rotorwelle ausgebildet sein, die von einem nicht figürlich dargestellten Rotor einer Windenergieanlage angetrieben wird.

Die Welle 3 weist eine Rotationsachse 4 auf. Soweit im Folgenden nichts anderes angegeben ist, sind Richtungsangaben jeweils auf diese Rotationsachse 4 der Welle 3 bezogen. Eine axiale Richtung ist somit eine Richtung parallel zur Rotationsachse 4 der Welle 3. Eine radiale Richtung ist eine Richtung senkrecht zur Rotationsachse 4 der Welle 3.

Das Kegelrollenlager 1 weist einen Außenring 5 mit einer konischen Laufbahn auf. Der Außenring 5 verfügt vorzugsweise über einen Außendurchmesser von wenigstens 100 mm, insbesondere von wenigstens 1000 mm. Weiterhin weist das Kegelrollenlager 1 einen Innenring 6 mit einer konischen Laufbahn auf. Der Innenring 6 weist eine axiale Endfläche 7 auf. Die axiale Endfläche 7 ist im Bereich des axialen Endes des Innenrings 6 ausgebildet, zu dem hin der Durchmesser der Laufbahn des Innenrings 6 zunimmt.

Auf der Laufbahn des Innenrings 6 und der benachbarten Laufbahn des Außenrings 5 rollen konisch ausgebildete Wälzkörper 8 ab. Die Wälzkörper 8 sind in einem Käfig 9 angeordnet. Der Käfig 9 kann segmentiert oder in Umfangsrichtung geschlossen ausgebildet sein. Beispielsweise können die einzelnen Käfigsegmente in Umfangsrichtung aneinandergereiht sein, wie in der DE 102 46 825 A1 offenbart und aus Kunststoff hergestellt sein.

Der Innenring 6 ist auf der Welle 3 angeordnet und drehfest mit der Welle 3 verbunden. Dies kann beispielsweise mittels eines Pressverbands zwischen dem Innenring 6 und der Welle 3 realisiert sein. Demgemäß weisen der Innenring 6 und die Welle 3 eine radiale Überdeckung miteinander auf.

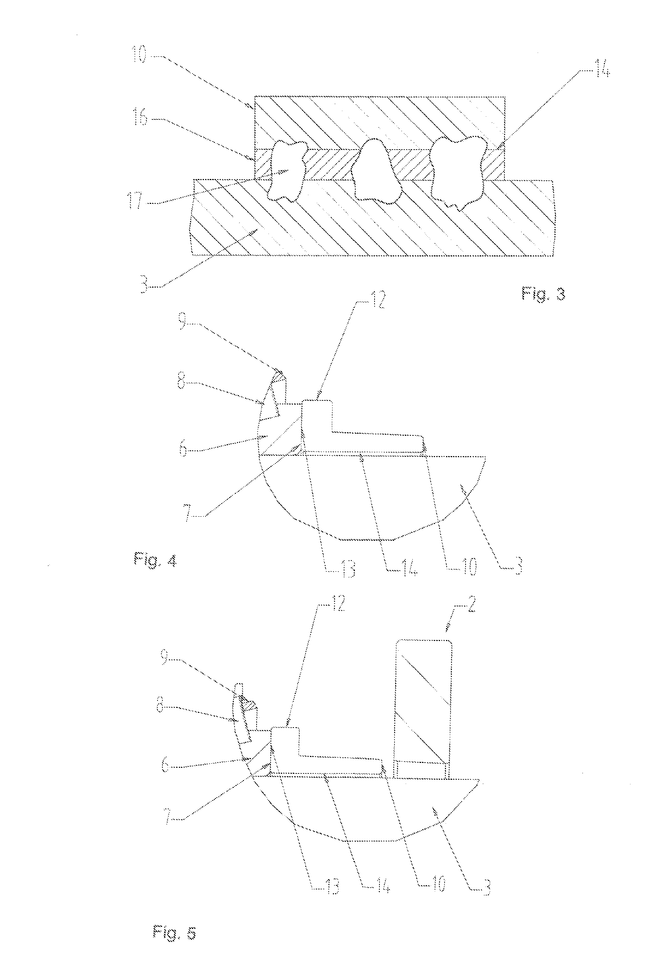

Die Anschlagvorrichtung 2 weist einen Spannring 10 und einen Befestigungsring 11 auf. Der Spannring 10 ist axial neben dem Innenring 6 angeordnet und weist an einem axialen Ende, das dem Innenring 6 benachbart ist, einen radial auswärts gerichteten Flansch 12 auf. Der Flansch 12 erstreckt sich in Radialrichtung genauso weit wie der benachbarte Innenring 6 und weist eine axiale Anschlagfläche 13 auf, die berührend an der axialen Endfläche 7 des Innenrings 6 anliegt. Die Bohrung des Spannrings 10 ist als eine Kontaktfläche 14 ausgebildet, die im Folgenden anhand von Figur 3 noch näher erläutert wird. Die äußere Mantelfläche des Spannrings 10 verjüngt sich konisch mit zunehmender Entfernung vom Flansch 12 und weist einen Öffnungswinkel von wenigstens 0,5° auf. Dabei ist der Öffnungswinkel als der Winkel zwischen der Mantelfläche des Spannrings 10 und der Mantelfläche eines Zylinders definiert. Der Spannring 10 kann in Umfangsrichtung unterbrochen sein und beispielsweise aus Metall, insbesondere aus Stahl, gefertigt sein. Beim dargestellten Ausführungsbeispiel weist der Spannring 10 in Radialrichtung, d. h. von seiner Bohrung bis zu seinem Außendurchmesser, eine kleinere maximale Erstreckung auf als in Axialrichtung. Der Außendurchmesser des Spannrings 10 beträgt vorzugsweise wenigstens 100 mm.

Der Befestigungsring 11 ist in Umfangsrichtung geschlossen ausgebildet und weist eine konische Bohrungsfläche auf. Die Bohrungsfläche des Befestigungsrings 11 wird radial einwärts gegen die Mantelfläche des Spannrings 10 gepresst und weist den gleichen Öffnungswinkel wie die Mantelfläche des Spannrings 10 auf. Demgemäß verjüngt sich die Bohrungsfläche des Befestigungsrings 11 mit zunehmender Entfernung vom Flansch 12 des Spannrings 10. Die Öffnungswinkel der Mantelfläche des Spannrings 10 und der Bohrungsfläche des Befestigungsrings 11 sind so klein gewählt, dass noch eine Selbsthemmung vorliegt und sich der Befestigungsring 11 demgemäß nicht selbsttätig relativ zum Spannring 10 axial verschiebt. Zwischen dem Flansch 12 des Spannrings 10 und dem Befestigungsring 11 ist ein axialer Spalt 15 ausgebildet.

Zwischen der Welle 3 und dem Spannring 10 ist eine im Folgenden noch näher erläuterte Mikroformschluss-Verbindung aus gebildet, durch die der Spannring 10 in Axialrichtung zuverlässig an der Welle 3 fixiert ist. Da der Innenring 6 mit seiner axialen Endfläche 7 an der Anschlagfläche 13 des Spannrings 10 anliegt, sichert der Spannring 10 den Innenring 6 in Axialrichtung. Außerdem stützt der Flansch 12 des Spannrings 10 den Innenring 6 und reduziert das Risiko, dass der benachbarte Bord des Innenrings 6, an dem die Wälzkörper 8 anlaufen, bricht. Die axiale Sicherung des Innenrings 6 ist beim dargestellten Ausführungsbeispiel allerdings lediglich in der Axialrichtung zum Spannring 10 hin, d. h. in den Figuren 1 und 2 nach rechts, wirksam. In der entgegengesetzten Richtung sichert der Spannring 10 den Innenring 6 nicht.

Figur 3 zeigt den Bereich der Kontaktfläche 14 des Spannrings 10 in einer stark vergrößerten schematischen Schnittdarstellung. Auf die Kontaktfläche 14 des Spannrings 10 ist ein Einbettungsmaterial 16 mit einer Schichtdicke von beispielsweise 30 µm aufgebracht. Die maximale Schichtdicke beträgt ca. 50 µm. In das Einbettungsmaterial 16 sind Hartstoffpartikel 17, deren mittlere Größe ca. 40 µm bis 70 µm beträgt, partiell eingebettet. Dabei ist die mittlere Größe als quadratischer Mittelwert der Größe der Hartstoffpartikel definiert und die Größe der Hartstoffpartikel jeweils als deren maximale Erstreckung. Die Hartstoffpartikel 17 können auch größer sein, wobei eine mittlere Größe von 100 µm jedoch nicht überschritten werden sollte. Insbesondere sind die Hartstoffpartikel 17 ca. bis zur Hälft ihrer Erstreckung senkrecht zur Kontaktfläche 14 in das Einbettungsmaterial 16 eingebettet. Bei dem Einbettungsmaterial 16 kann es sich beispielsweise um Nickel halten, das unter Zugabe der Hartstoffpartikel 17 galvanisch auf die Kontaktfläche 14 des Spannrings 10 aufgebracht ist. Die Hartstoffpartikel 17 können beispielsweise aus Diamant oder aus anderen harten Materialien wie Siliziumcarbid (mittlere Partikelgröße ca. 9 µm bis 25 µm) usw. bestehen. Ebenso ist es beispielsweise möglich, eine Schicht aus Molybdänpartikeln aufzubringen. Dieses Aufbringen erfolgt vorzugsweise ohne Einbettungsmaterial 16 direkt auf die Kontaktfläche 14 des Spannrings 10. Eine typische Schichtdicke beträgt in diesem Fall ca. 50 µm. Die Hartstoffpartikel besitzen eine höhere Härte als der Spannring 10 und auch als die Welle 3.

Da die Hartstoffpartikel 17 aus dem Einbettungsmaterial 16 herausragen drücken sie sich sowohl in die Mantelfläche der Welle 3 als auch in die Kontaktfläche 14 des Spannrings 10 ein und bilden dadurch die bereits erwähnte Mikroformschluss-Verbindung zwischen dem Spannring 10 und der Welle 3 aus.

Der für das Eindrücken der Hartstoffpartikel 17 in die Welle 3 und den Spannring 10 erforderliche Anpressdruck wird mit Hilfe des Befestigungsrings 11 erzeugt. Der Befestigungsring 11 ist beispielsweise auf den Spannring 10 aufgeschrumpft, wie im Folgenden anhand der Figuren 4 und 5 noch näher erläutert wird. Da der Spannring 10 in Umfangsrichtung offen ausgebildet ist, setzt er dem radialen Anpressdruck des Befestigungsrings 11 fast keinen Widerstand entgegen, so dass dieser Anpressdruck fast in voller Höhe auf die Kontaktfläche 14 des Spannrings 10 einwirkt und diese in Richtung der Mantelfläche der Welle 3 radial nach innen drückt. Auf diese Weise werden zunächst die größten und dann immer kleinere Hartstoffpartikel 17 zwischen der Kontaktfläche 14 des Spannrings 10 und der Mantelfläche der Welle 3 eingeklemmt und in das Material des Spannrings 10 und der Welle 3 eingedrückt.

Da die Hartstoffpartikel 17 partiell in das Einbettungsmaterial 16 eingebettet sind, das mit dem Spannring 10 fest verbunden ist, ist es zur Ausbildung der Mikroformschluss-Verbindung zwischen dem Spannring 10 und der Welle 3 nicht zwingend erforderlich, die Hartstoffpartikel 17 in den Spannring 10 einzudrücken. Ein Eindrücken kann beispielsweise dadurch verhindert oder reduziert werden, dass ein Spannring 10 verwendet wird, der eine höhere Härte als die Welle 3 aufweist.

Die Montage der Anschlagvorrichtung 2 wird im Folgenden anhand der Figuren 4 und 5 näher erläutert.

Die Figuren 4 und 5 zeigen unterschiedliche Momentaufnahmen der erfindungsgemäßen Lageranordnung während der Montage der Anschlagvorrichtung 2 in einer Figur 2 entsprechenden Darstellung. Das Kegelrollenlager 1 wird in für sich bekannter Weise in einer gewünschten axialen Position auf der Welle 3 angeordnet. Falls das Kegelrollenlager 1 in zwei Axialrichtungen fixiert werden soll, kann es beispielsweise unmittelbar neben einer nicht figürlich dargestellten Wellenschulter angeordnet werden.

Dann wird der Spannring 10 ohne den Befestigungsring 11 axial auf die Welle 3 aufgeschoben, bis die axiale Anschlagfläche 13 des Spannrings 10 an die axiale Endfläche 7 des Innenrings 6 anliegt. Dieser Zustand ist in Figur 4 dargestellt. Beim Aufschieben wird darauf geachtet, dass der Spannring 10 die Mantelfläche der Welle 3 nicht berührt oder zumindest nicht mit einem unzulässig hohen Anpressdruck gegen die Mantelfläche der Welle 3 gepresst wird. Ein unzulässig hoher Anpressdruck liegt dann vor, wenn die Hartstoffpartikel 17 in die Mantelfläche der Welle 3 eingedrückt werden und durch die zusätzliche Axialbewegung die Oberfläche der Welle 3 beschädigen oder aus dem Einbettungsmaterial 16 herausgerissen werden. Infolge der offenen Ausführung des Spannrings 10 ist es bei abgenommenem Befestigungsring 11 problemlos möglich, den Spannring 10 so stark aufzuweiten, dass das axiale Aufschieben auf die Welle 3 störungsfrei erfolgen kann. Insbesondere kann der Spannring 10 elastisch ausgebildet sein und in seinem entspannten Zustand inklusive der Hartstoffpartikel 17 einen Innendurchmesser aufweisen, der größer als der Außendurchmesser der Welle 3 ist.

In einem nächsten Schritt wird der Befestigungsring 11 radial geweitet, so dass sein Innendurchmesser zunimmt. Dies kann beispielsweise durch Erwärmen des Befestigungsrings 11 und der damit verbundenen thermischen Ausdehnung erfolgen. Dann wird der Befestigungsring 11 axial auf die Welle 3 und insbesondere über den Spannring 10 geschoben. Dies ist in Figur 5 dargestellt. Das Aufschieben erfolgt möglichst konzentrisch zum Spannring 10, um eine vorzeitige Berührung des Spannrings 10 während des Aufschiebens zu vermeiden. Das Aufschieben wird dann beendet, wenn der Befestigungsring 11 eine vorgegebene Axialposition relativ zum Spannring 10 erreicht hat. Alternativ dazu kann das Aufschieben auch dann beendet werden, wenn die konische Bohrung des Befestigungsrings 11 über ihren gesamten Umfang berührend an der konischen Mantelfläche des Spannrings 10 anliegt. In beiden Fällen wird das Aufschieben beendet, bevor der axiale Spalt 15 zwischen dem Befestigungsring 11 und dem Flansch 12 des Spannrings 10 verschwunden ist.

Wenn die axiale Endposition des Befestigungsrings 11 erreicht ist, wird der Befestigungsring 11 abgekühlt und dadurch auf den Spannring 10 aufgeschrumpft, d. h. der Innendurchmesser des Befestigungsrings 11 wird reduziert und dadurch wird der ggf. elastisch nachgiebige Spannring 10 radial zusammengedrückt, bis er ringsum an der Welle 3 anliegt. Eine weitere Reduzierung des Innendurchmessers des Befestigungsrings 11 führt dazu, dass die Hartstoffpartikel 17 wie bereits anhand von Figur 3 beschrieben in die Welle 3 und evtl. auch in den Spannring 10 eingedrückt werden. Dadurch wird die bereits erläuterte Mikroformschluss-Verbindung zwischen dem Spannring 10 und der Welle 3 ausgebildet und dadurch der Spannring 10 sehr fest an der Welle 3 fixiert. Damit ist das erfindungsgemäße Verfahren beendet.

Eine Demontage der Anschlagvorrichtung kann in gleicher Weise, aber in umgekehrter Reihenfolge wie für die Montage beschrieben, erfolgen.

### Bezugszeichenliste

- 1: Kegelrollenlager
- 2: Anschlagvorrichtung
- 3: Welle
- 4: Rotationsachse
- 5: Außenring
- 6: Innenring
- 7: Axiale Endfläche
- 8: Wälzkörper
- 9: Käfig
- 10: Spannring
- 11: Befestigungsring
- 12: Flansch
- 13: Axiale Anschlagfläche
- 14: Kontaktfläche
- 15: Axialer Spalt
- 16: Einbettungsmaterial
- 17: Hartstoffpartikel

## Patentansprüche

1. Verfahren zum axialen Sichern eines Maschinenelements (1), das an einem Träger (3) befestigt ist, wobei eine Anschlagvorrichtung (2) derart neben dem Maschinenelement (1) angeordnet wird, dass die Anschlagvorrichtung (2) axial am Maschinenelement (1) anliegt, **dadurch gekennzeichnet, dass** zwischen einer Kontaktfläche (14) der Anschlagvorrichtung (2) und einer Gegenfläche des Trägers (3) eine Mikroformschluss-Verbindung ausgebildet wird und **dadurch** die Anschlagvorrichtung (2) am Träger (3) axial fixiert wird.

2. Verfahren nach Anspruch 1, **dadurch gekennzeichnet, dass** die Mikroformschluss-Verbindung mit Hilfe von Hartstoffpartikeln (17) ausgebildet wird, die im Bereich der Gegenfläche partiell in das Material des Trägers (3) eingedrückt werden.

3. Verfahren nach Anspruch 2, **dadurch gekennzeichnet, dass** die Hartstoffpartikel (17) erst dann in das Material des Trägers (3) eingedrückt werden, wenn die Anschlagvorrichtung (2) axial am Maschinenelement (1) anliegt.

4. Verfahren nach einem der vorhergehenden Ansprüche, **dadurch gekennzeichnet, dass** die Anschlagvorrichtung (2) eine erste Komponente (10) und eine zweite Komponente (11) aufweist, wobei die erste Komponente (10) derart neben dem Maschinenelement (1) angeordnet wird, dass sie axial am Maschinenelement (1) anliegt.

5. Verfahren nach Anspruch 4, **dadurch gekennzeichnet, dass** die erste Komponente (10) mit der zweiten Komponente (11) gegen den Träger (3) gepresst wird.

6. Verfahren nach Anspruch 5, **dadurch gekennzeichnet, dass** die Abmessungen der zweiten Komponente (11) geändert werden und **dadurch** die erste Komponente (10) gegen den Träger (3) gepresst wird.

7. Anschlagvorrichtung zum axialen Sichern eines Maschinenelements (1), das an einem Träger (3) angeordnet ist, mit einem Spannring (10), der eine mit Hartstoffpartikeln (17) beschichtete radiale Kontaktfläche (14) aufweist.

8. Anschlagvorrichtung nach Anspruch 7, **dadurch gekennzeichnet, dass** die Hartstoffpartikel (17) partiell in ein Einbettungsmaterial (16) eingebettet sind.

9. Anschlagvorrichtung nach einem der Ansprüche 7 oder 8, **dadurch gekennzeichnet, dass** der Spannring (10) in Umfangsrichtung unterbrochen ausgebildet ist.

10. Anschlagvorrichtung nach einem der Ansprüche 7 bis 9, **dadurch gekennzeichnet, dass** der Spannring (10) eine axiale Anschlagfläche (13) aufweist.

11. Anschlagvorrichtung nach einem der Ansprüche 7 bis 10, **dadurch gekennzeichnet, dass** der Spannring (10) einen radial gerichteten Flansch (12) aufweist.

12. Anschlagvorrichtung nach einem der Ansprüche 7 bis 11, **dadurch gekennzeichnet, dass** die Anschlagvorrichtung (2) einen Befestigungsring (11) aufweist, der den Spannring (10) radial staucht oder aufweitet.

13. Anschlagvorrichtung nach Anspruch 12, **dadurch gekennzeichnet, dass** der Befestigungsring (11) in Umfangsrichtung geschlossen ausgebildet ist.

14. Anschlagvorrichtung nach einem der Ansprüche 12 oder 13, **dadurch gekennzeichnet, dass** der Spannring (10) und der Befestigungsring (11) je eine konische Fläche mit gleichem Öffnungswinkel aufweisen.

15. Anordnung mit einem Träger (3), einem Maschinenelement (1) und einer Anschlagvorrichtung (2), wobei das Maschinenelement (1) am Träger (3) befestigt ist, **dadurch gekennzeichnet, dass** die Anschlagvorrichtung (2) gemäß einem der Ansprüche 7 bis 14 ausgebildet ist und das Maschinenelement (1) axial sichert.
